(19) Europäisches Patentamt
European Patent Office
Office européen des brevets

(11) **EP 3 258 187 B1**

(12) **FASCICULE DE BREVET EUROPEEN**

(45) Date de publication et mention
de la délivrance du brevet:
**19.05.2021 Bulletin 2021/20**

(51) Int Cl.:
*F24H 9/20* *(2006.01)*        *H02J 3/28* *(2006.01)*
*H02J 3/38* *(2006.01)*

(21) Numéro de dépôt: **17175650.5**

(22) Date de dépôt: **13.06.2017**

(54) **PROCÉDÉ DE MODIFICATION DE LA CONSOMMATION ÉNERGÉTIQUE D'UN ÉQUIPEMENT**

VERFAHREN ZUR ÄNDERUNG DES ENERGIEVERBRAUCHS EINES GERÄTS

METHOD FOR MODIFYING THE POWER CONSUMPTION OF A DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.06.2016 FR 1655485**

(43) Date de publication de la demande:
**20.12.2017 Bulletin 2017/51**

(73) Titulaire: **Electricité de France**
**75008 Paris (FR)**

(72) Inventeurs:
• **COINCE, Anne-Sophie**
**77210 AVON (FR)**
• **SUPLICE, Béatrice**
**92600 ASNIERES sur Seine (FR)**

(74) Mandataire: **Regimbeau**
**87 rue de Sèze**
**69477 Lyon Cedex 06 (FR)**

(56) Documents cités:
WO-A1-2015/054878    FR-A1- 3 019 882
US-A1- 2012 083 939    US-A1- 2013 205 814

**Description**

DOMAINE TECHNIQUE GENERAL

La présente invention concerne un procédé de modulation de la consommation énergétique d'un équipement tel qu'un chauffe-eau.

ETAT DE L'ART

Le « mix énergétique » désigne la répartition des différentes sources consommées pour la production d'énergie électrique. Ce mix énergétique, en constante évolution, voit la progression constante des Energies Renouvelables, ce qui entraîne un besoin accru en flexibilités du système.

Ces dernières, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme vont fortement augmenter.

D'autre part, des problèmes locaux de qualité de fourniture électrique vont être amplifiés du fait d'une répartition géographique inhomogène des installations, avec par exemple plutôt du photovoltaïque dans le Sud et de l'éolien dans le Nord.

Il apparait essentiel de trouver des solutions de pilotage de la charge associée en vue de maitriser l'aléa lié aux Energies Renouvelables.

Il a par exemple été proposé la charge de batteries stationnaires pour faciliter l'insertion massive de panneaux photovoltaïques (démonstrateur « NiceGrid »). Toutefois, les coûts d'investissement élevés ne permettent pas d'envisager un déploiement à grande échelle de cette solution alternative. Il est également prévu d'agir sur la puissance réactive fournie par les panneaux photovoltaïques pour ajuster la tension. Cependant, cette dernière piste ne répond pas aux enjeux de maîtrise de l'aléa éolien.

Alternativement au stockage via batteries, il est possible de stocker l'énergie thermiquement. Avec près de 12 millions d'unités installées en France dont plus de 80% sont asservies au signal tarifaire Heures Pleines/Heures creuses (HP/HC), le parc de Chauffe-Eau Joule (CEJ) à accumulation résidentiel - utilisé aujourd'hui pour le lissage journalier de la courbe de charge - est susceptible de répondre à ces nouveaux enjeux.

La Demanderesse a ainsi proposé des mécanismes permettant d'utiliser facilement et efficacement la capacité de stockage des chauffe-eau joule ou thermodynamiques pour réguler l'énergie électrique d'origine renouvelable (voir par exemple les demandes FR1363229, FR1452015 ou FR1452022).

On constate que ces mécanismes apportent satisfaction et permettent de réduire sensiblement la puissance « renouvelable » excédentaire injectée sur le réseau, tout en limitant la consommation d'énergie non renouvelable.

Aujourd'hui, les algorithmes d'autoconsommation d'une production intermittente d'énergie renouvelable consistent à moduler la puissance consommée (par les CEJ) pour absorber l'excédent au fil de l'eau. Ils utilisent des données « temps réel » représentatives de l'état du réseau (estimation du surplus). Ces données peuvent être mesurées par des capteurs mais sont aussi disponibles - au pas de temps 1 à 2s - en sortie des compteurs ERDF disposant d'une télé-information client.

Toutefois, les contraintes d'installation ne permettent pas toujours de transmettre ces données énergétiques par liaison filaire. Dans de nombreux cas, la communication radio est privilégiée. La fréquence d'acquisition est alors de l'ordre de quelques dizaines de secondes ou de minutes, ce qui dégrade la performance des algorithmes en introduisant un décalage entre le surplus instantané réel et calculé.

D'autre part, dans certaines conditions climatiques (ciel nuageux avec beaucoup de vent par exemple), il n'est pas judicieux d'enclencher l'autoconsommation car la production excédentaire va être sous forme de pics de forte amplitude et de faible durée qu'il est impossible de prévoir à l'échelle individuelle. La solution consistant à piloter les usages à partir de mesures instantanées (typiquement à un pas de temps de 5s) conduit à un stress des équipements, voire à la création de perturbations sur le réseau. Cela peut accélérer le vieillissement de l'équipement consommateur qui n'a en effet pas été conçu pour un tel fonctionnement avec des variations de puissance à fréquence élevée. Par exemple, des équipements tels qu'une pompe à chaleur présentent des durées minimales de fonctionnement (généralement 15 minutes) et d'arrêt (10 minutes) qui n'autorisent pas les cycles courts.

Par conséquent, il a été proposé de piloter les usages à partir de moyennes temporelles du surplus (typiquement sur 10 minutes) pour ajouter de l'inertie. Toutefois cela introduit un déphasage conséquent à l'origine d'un soutirage indésirable sur le réseau (c'est-à-dire la consommation d'énergie d'origine non-renouvelable) qui peut léser les clients selon la tarification en cours.

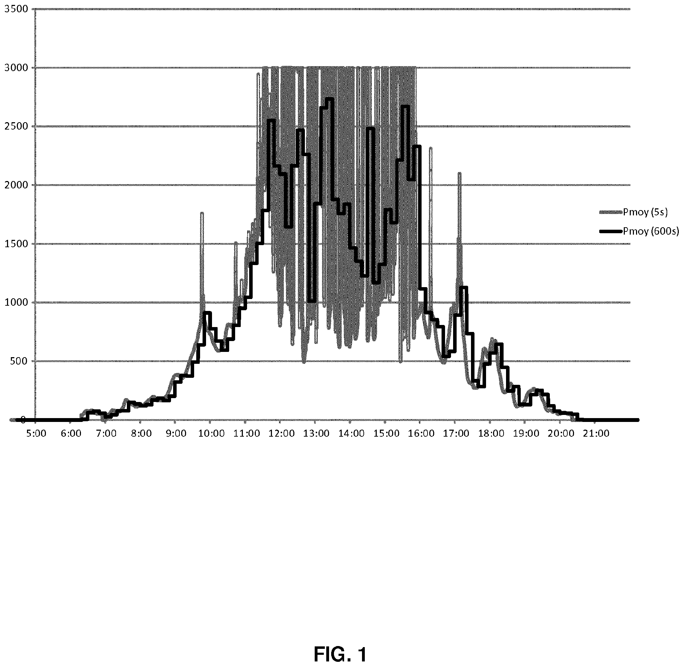

La **figure 1** représente ainsi deux exemples de courbes de surplus de puissance (appelées également courbes des écarts), lissée respectivement sur des intervalles temporels élémentaires de 5s et 10min, pour une installation de 3kWc de panneaux tout au long d'une journée « mouvementée ».

On observe la très forte variabilité de la puissance lorsque le pas de temps est court, et le retard obtenu lorsque le pas de temps est plus long.

Il serait par conséquent souhaitable de disposer d'une stratégie améliorée de gestion de la consommation énergétique des équipements consommateurs permettant de limiter au maximum les pics et les variations de puissance énergétique d'origine renouvelable injectée sur le réseau, et ce, quelles que soient les conditions climatiques (en d'autres termes quel que soit le profil de production d'énergie renouvelable sur la journée), tout en limitant les coûts et sans détériorer l'état des équipements et le confort de l'utilisateur. Le document FR3019882 décrit un procédé selon le préambule de la revendication 1.

PRESENTATION DE L'INVENTION

L'invention propose de pallier ces inconvénients en proposant selon un premier aspect un procédé de modification de la consommation énergétique d'un équipement alimenté par un réseau électrique, le procédé comprenant des étapes de :

(a) réception de données descriptives d'un état du réseau électrique, comprenant des données quantifiant de façon sensiblement instantanée un surplus ou un déficit d'énergie d'origine renouvelable au sein du réseau ;
(b) génération par un élément de gestion d'une consigne dynamique de puissance en fonction desdites données ;
(c) émission de ladite consigne à destination d'un module de contrôle de l'équipement ;
(d) régulation en puissance dudit équipement en fonction de la consigne de puissance ;

caractérisée en ce que l'étape (b) comprend la limitation de ladite consigne dynamique de puissance générée de sorte à ce qu'elle présente une vitesse de variation inférieure à une vitesse seuil de référence.

Le dispositif selon l'invention est avantageusement complété par les caractéristiques suivantes, prises seules ou en une quelconque de leur combinaison techniquement possible :

- les étapes (a) à (c) sont répétées sensiblement à une fréquence prédéterminée ou à chaque variation du surplus ou déficit d'énergie d'origine renouvelable, de sorte à générer une consigne dynamique de puissance au cours du temps ;
- ladite fréquence prédéterminée est supérieure à 1 min$^{-1}$.
- les données descriptives d'un état du réseau électrique comprennent des données quantifiant de façon prévisionnelle un niveau d'instabilité du surplus ou du déficit d'énergie d'origine renouvelable au sein du réseau, ladite limitation de ladite consigne dynamique de puissance générée étant mise en œuvre à l'étape (b) seulement si lesdites données quantifiant de façon prévisionnelle un niveau d'instabilité du surplus ou du déficit d'énergie d'origine renouvelable au sein de réseau sont représentatives d'une instabilité significative ;
- les données descriptives d'un état du réseau électrique comprennent des données quantifiant de façon sensiblement instantanée la variation de consommation électrique au sein de réseau, l'étape (b) comprenant :

    - la limitation de ladite consigne dynamique de puissance générée de sorte à ce qu'elle présente une vitesse de variation inférieure à une première vitesse seuil de référence, si lesdites données quantifiant de façon sensiblement instantanée la variation de consommation électrique au sein de réseau (2) ne sont pas représentatives d'une baisse significative de la consommation ; et sinon
    - la limitation de ladite consigne dynamique de puissance générée de sorte à ce qu'elle présente une vitesse de variation inférieure à une deuxième vitesse seuil de référence supérieure à la première vitesse de référence.

- la vitesse seuil de référence est proportionnelle à une vitesse maximale d'augmentation de production d'énergie d'origine renouvelable au sein du réseau ;
- le procédé comprend une étape préalable de calcul de ladite vitesse seuil de référence pour une installation de production d'énergie renouvelable de référence ;
- ladite première vitesse seuil de référence est comprise entre 5 et 50 Watts par 15 secondes, et ladite deuxième vitesse seuil de référence est comprise entre 50 et 200 Watts par 15 secondes ;
- ledit équipement est un chauffe-eau comprenant un réservoir, un dispositif de chauffage de l'eau du réservoir et le module de contrôle, le dispositif de chauffage comprenant un moyen de chauffage alimenté par le réseau électrique ;
- l'étape (d) consiste en la régulation en puissance dudit moyen de chauffage par le module de contrôle en fonction de la consigne de puissance ;
- le module de contrôle est configuré pour ignorer la consigne de puissance lorsqu'une température de l'eau du réservoir est supérieure à un seuil prédéfini, un signal représentatif de la température de l'eau du réservoir étant généré par une sonde de température et émis à destination du module de contrôle ;

- l'étape (b) comprend l'interception et la modification par un élément de leurre disposé entre la sonde et le module de contrôle dudit signal représentatif de la température de l'eau du réservoir en fonction desdites données descriptives d'un état du réseau électrique ;
- l'étape (a) comprend la réception desdites données descriptives d'un état du réseau électrique par un boitier depuis un réseau de communication, le boitier étant connecté audit élément de gestion ou au module de contrôle ;
- le réseau comprend un réseau local comprenant des moyens locaux de production d'énergie renouvelable connectés en aval d'un compteur, lesdites données quantifiant de façon sensiblement instantanée un surplus ou un déficit d'énergie d'origine renouvelable au sein du réseau étant des données de consommation fournies par le compteur.

Selon un deuxième aspect, l'invention concerne un système comprenant un équipement alimenté par un réseau électrique et un élément de gestion configuré pour la mise en œuvre du procédé selon le premier aspect de modification de la consommation énergétique de l'équipement.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 précédemment décrite représente un exemple de courbe de surplus lors d'une journée d'été présentant de fortes instabilités de production, avec les courbes consignes de puissance obtenues lors de la mise en œuvre de procédés connus ;
- la figure 2a est un schéma d'un premier mode de réalisation d'un système pour la mise en œuvre du procédé selon l'invention ;
- la figure 2b est un schéma d'un deuxième mode de réalisation d'un système pour la mise en œuvre du procédé selon l'invention ;
- la figure 3 représente un exemple de courbe de production d'une installation de référence.
- les figures 4, 5a-5d, 6a-6b représentent des exemple de courbes de surplus lors d'une journée présentant ou non de fortes instabilités de production, avec les courbes de consignes de puissance obtenues lors de la mise en œuvre de différents modes de réalisation du procédé selon l'invention.

DESCRIPTION DETAILLEE

*Architecture générale*

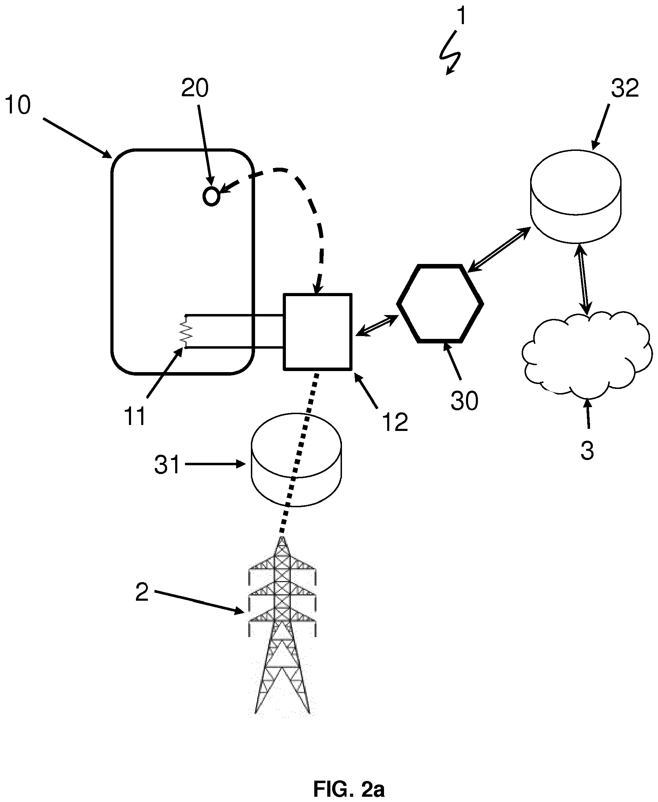

La **figure 2a** représente l'architecture générale d'un mode de réalisation préféré d'un système pour la mise en œuvre du procédé de modification de la consommation énergétique d'un équipement 1 du système, selon l'invention. Cet équipement est typiquement un Chauffe-Eau Joule (CEJ) domestique, bien que l'invention ne soit pas limitée à ces derniers (44% des habitats en sont équipés). Ledit système peut comme l'on va voir être uniquement constitué dudit équipement 1.

Cet équipement 1 comprend ainsi avantageusement :

- un réservoir d'eau 10 sur la capacité énergétique duquel on va jouer (communément appelé « ballon » d'eau chaude) ;
- un dispositif de chauffage 11 de l'eau du réservoir 10, le dispositif 11 comprenant un moyen de chauffage alimenté par un réseau électrique 2 ;
- une sonde de température 20 configurée pour émettre un signal représentatif de la température de l'eau du réservoir 10 ;
- un module de contrôle 12 dudit dispositif de chauffage 11 en fonction dudit signal émis par la sonde 20.

Le moyen de chauffage électrique du dispositif de chauffage 11 est généralement une résistance, d'où le chauffage de l'eau par effet joule. Alternativement, il peut s'agir par exemple d'une pompe à chaleur complète dont la source chaude est en échange thermique avec l'eau du réservoir 10 (et la source froide en échange thermique par exemple avec l'air extérieur), de sorte à permettre un chauffage de l'eau avec une efficacité supérieure à 100%, avec éventuellement une résistance d'appoint.

De façon préférée, le dispositif 11 est intégralement électrique (il ne comprend ainsi que des moyens de chauffage alimentés par le réseau 2, et pas de bruleurs à gaz par exemple). L'énergie de chauffage fournie à l'eau est alors entièrement d'origine électrique. L'équipement 1 n'est toutefois pas limité à cette configuration et le dispositif 11 peut alternativement comprendre en outre un moyen de chauffage alternatif (non-électrique) tel qu'un bruleur, un échangeur avec un collecteur solaire, etc.

A noter que l'équipement 1 peut être autre chose qu'un chauffe-eau, et notamment tout équipement alimenté à l'électricité et capable de stocker de l'énergie, soit sous forme thermique (on comprendre par exemple qu'un convecteur domestique est capable de stocker d'une certaine façon de la chaleur via le niveau de température de l'air d'une habitation), soit sous forme mécanique (par exemple une pompe avec un réservoir d'eau en hauteur), soit directement sous forme chimique (une batterie notamment). Toutefois, dans la suite de la présente description, on prendra l'exemple préféré du chauffe-eau car présent dans toutes les habitations.

Le réseau 2 est un réseau à grande échelle qui relie une pluralité de sources électriques. Comme expliqué précédemment, il s'agit à la fois d'énergie d'origine non-renouvelable (nucléaire et/ou fossile) et d'origine renouvelable (solaire, éolien, etc.). L'énergie d'origine renouvelable présente des problèmes de variabilité et de prévisibilité, alors que l'énergie d'origine non-renouvelable est d'une meilleure disponibilité.

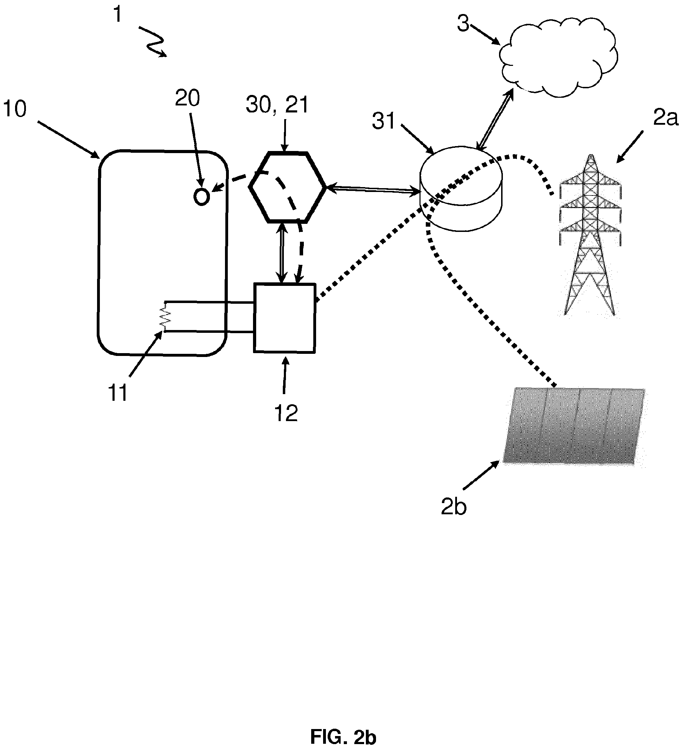

Dans l'hypothèse où l'utilisateur de l'équipement 1 possède une source personnelle d'énergie renouvelable (par exemple des panneaux photovoltaïques de toit), comme dans le cas particulier représenté sur la **figure 2b,** on comprend que le réseau 2 englobe à la fois le réseau électrique global 2a et le réseau électrique local de l'utilisateur 2b (en d'autres termes que les centrales distantes et les panneaux solaires locaux peuvent aussi bien l'un que l'autre alimenter le dispositif de chauffage 11). Une source d'énergie est définie dans le réseau local 2b si elle est connectée en aval du compteur électrique 31. Inversement une source d'énergie est définie dans le réseau global 2a si elle est connectée en amont du compteur électrique 31. On va pour le moment considérer le réseau électrique 2 comme un tout, mais pour certains modes de réalisation décrits plus loin on tiendra compte du réseau local 2b.

Le réservoir 10 de l'équipement 1 est régulé en température. Pour cela il comprend une ou plusieurs sondes de température 20 (qui seront décrites plus en détail plus loin) et un module de contrôle 12 du dispositif de chauffage 11. La ou les sondes 20 envoient en permanence ou par intermittence un signal représentatif de la température de l'eau du réservoir 10. Ce signal peut être un envoi de données représentant numériquement la température, ou comme on verra plus loin un signal électrique dont un paramètre est fonction de la température.

Le module de contrôle 12 est typiquement une carte électronique qui déclenche ou non le chauffage en fonction de la température de l'eau et de nombreux autres paramètres éventuels (programmation, saison, plages horaires, heures creuses/heures pleines, usages habituels de l'utilisateur, etc.).

De façon générale, un chauffe-eau comprend le plus souvent deux températures de seuil (dont la valeur peut varier selon le moment et des réglages personnels) : une première température de seuil qui est la température « minimale » et une deuxième température de seuil qui est la température « maximale » (le premier seuil est inférieur au deuxième seuil). Ces deux seuils sont quelques degrés autour (par exemple +/- 4°C) d'une température de « confort » qui est la température moyenne souhaitée, réglée par l'utilisateur (l'intervalle 50-65°C est courant).

Le module de contrôle 12 est ainsi configuré pour activer le dispositif de chauffage 11 lorsque le signal reçu est représentatif d'une température inférieure au premier seuil prédéfini, et/ou configuré pour désactiver le dispositif de chauffage 11 lorsque le signal reçu est représentatif d'une température supérieure au deuxième seuil prédéfini.

Ainsi, tant que le dispositif de chauffage 11 est arrêté et que l'on est entre les deux seuils rien ne se passe. Si la température baisse (avec le temps ou parce que l'utilisateur tire de l'eau chaude) et passe en-dessous du premier seuil, le dispositif de chauffage 11 est activé, et ce jusqu'à atteindre le deuxième seuil (température maximale, supérieure au premier seuil). La température se remet ensuite à baisser, etc. En d'autres termes, il y a une alternance de phases de « refroidissement » pendant lesquelles la température descend du deuxième seuil au premier seuil (voir au-delà si l'utilisateur continue d'utiliser de l'eau chaude), et de phases de « chauffe » pendant lesquelles la température monte sous l'effet du dispositif 11 allumé d'une température inférieure ou égale au premier seuil jusqu'au deuxième seuil.

Comme expliqué avant, cette configuration peut dépendre d'autres paramètres, et il peut y avoir plus de deux seuils, éventuellement mobiles, par exemple de façon à optimiser la consommation d'énergie pendant les heures creuses (les chauffe-eau sont souvent prévus pour remonter l'eau en température préférentiellement au petit matin, de sorte à maximiser l'utilisation des heures creuses et avoir de l'eau chaude en quantité au moment de se doucher).

En pratique, les premier et deuxième seuils sont souvent la conséquence d'un phénomène d'hystérésis autour d'une valeur médiane, qui définit ces deux seuils. L'écart induit est alors d'environ 3°C.

La présente invention n'est limitée à aucune configuration en particulier, on comprendra que, de façon générale, le module de contrôle 12 régule la température du réservoir 10 via l'activation/désactivation du dispositif de chauffage 11 en fonction de signaux qui lui sont émis, signaux pouvant représenter des températures et/ou des consignes de fonctionnement.

*Régulation en puissance*

De façon générale, l'équipement 1 est capable de présenter une puissance consommée variable entre une puissance maximale et une puissance minimale.

Dans le cas d'un chauffe-eau, le présent dispositif de chauffage 11 est équipé d'un dispositif à régulation de puissance, c'est-à-dire qu'il adapte la puissance des moyens de chauffage par effet Joule en fonction de différents besoins.

Le module de contrôle 12 régule ainsi en puissance le moyen de chauffage par effet Joule du dispositif de chauffage 11.

Pour cela, l'homme du métier peut par exemple utiliser des actionneurs de puissance tels que décrits dans l'une ou l'autre des demandes FR1452015 et FR1452022. Ces actionneurs de puissance sont des composants permettant de modifier la puissance du moyen de chauffage auquel ils sont associés. En particulier, un actionneur de puissance modifie l'intensité et/ou la tension (en particulier seulement la tension) du courant sur une branche de sorte à doser la puissance effective consommée par le moyen de chauffage associé entre 0 et 100% de sa valeur nominale (i.e. sa puissance maximale). En d'autres termes, à chaque moyen de chauffage de puissance nominale $P_i$ est associée une puissance effective $Peff_i = A_i * P_i$, où $A_i$ est un ratio de puissance de l'actionneur, compris entre 0 et 1.

Dans le présent système, les actionneurs de puissance permettent de réguler en puissance le dispositif de chauffage 11 en fonction de données descriptives d'un état dudit réseau électrique 2 (voir plus loin). Pour cela, chaque actionneur de puissance est contrôlé par le module de contrôle 12 de sorte à réguler en puissance le moyen de chauffage. Par contrôle, on entend que le module de contrôle 12 est adapté pour déterminer et imposer les ratios de puissance $A_i$ des actionneurs de puissance en fonction des consignes qu'il reçoit. L'intérêt des actionneurs de puissance est de rendre régulable en puissance un dispositif tout-ou-rien classique.

Alternativement, le dispositif de chauffage 11 peut être un équipement électronique à puissance variable recevant un signal de la part du module de contrôle 12.

On comprendra toutefois que la présente invention n'est limitée à aucune façon particulière de réguler en puissance les moyens de chauffage, et on comprendra qu'il suffit que le système soit configuré de sorte que le module de contrôle 12 régule en puissance le moyen de chauffage du dispositif de chauffage 11.

*Mécanisme de gestion*

Les données descriptives de l'état du réseau électrique 2 sont transmises à un élément de gestion 30 du système, connecté à l'équipement 1 et plus précisément au module de contrôle 12. Cet élément de gestion 30 est configuré pour contrôler le module de contrôle 12 en fonction d'au moins des données descriptives d'un état dudit réseau électrique 2.

En d'autres termes, l'élément de gestion 30 agit comme un module de pré-traitement des données descriptives de l'état du réseau 2.

L'élément de gestion 30 peut s'intégrer à un module de contrôle 12 d'un chauffe-eau existant, et ne nécessite pas de modification structurelle. En particulier, il n'y a que peu de modifications du module de contrôle 12 qui ne réalise qu'un « post-traitement » (on verra plus loin en quoi il consiste). Il est ainsi facile et peu coûteux de modifier les équipements existants. Dans le cas de chauffe-eau neufs, l'élément de gestion 30 peut être directement intégré au module de contrôle 12 comme une fonction supplémentaire, ou à un gestionnaire d'énergie du foyer, afin d'éliminer la nécessité de boitier supplémentaire (en d'autres termes le module de contrôle 12 traite directement les données descriptives de l'état du réseau électrique 2).

Ces données désignent de façon générale toutes les informations sur la charge du réseau 2, le taux d'énergie d'origine renouvelable, les prévisions de variation de ce taux, la production/consommation en général, etc.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet, mais également le réseau électrique 2) via un boitier 31, 32, en particulier en temps réel.

Dans le cadre du présent procédé ces données descriptives comprennent au moins des données quantifiant de façon sensiblement instantanée un surplus ou un déficit d'énergie d'origine renouvelable au sein du réseau 2. Elles sont généralement simplement obtenues par soustraction de la puissance consommée à la puissance produite (les données quantifiant la consommation et ou la production peuvent être également transmises).

Plus précisément, ces données permettent typiquement de retracer une courbe telle que celle de la figure 1. Elle est dite « de façon sensiblement instantanée », ce qui signifie en temps réels aux délais de transmission près. En pratique, les données sont reçues en local quelques secondes après avoir été générées (jusqu'à une minute, avantageusement moins de 15s), d'où un très léger retard non significatif à l'échelle d'une journée qui permet de considérer les données comme quasi instantanées.

On note qu'outre les données instantanées, des données prévisionnelles (i.e. quantifiant un surplus ou un déficit à venir d'énergie d'origine renouvelable au sein du réseau 2) peuvent également être incluses.

Dans un premier mode de réalisation, le boitier 31 est un compteur électrique intelligent (par exemple LINKY) disposant d'un émetteur Télé-Information Client (TIC) intégré ou non. Les données utilisées peuvent notamment être les champs de la TIC tels que par exemple : l'état binaire d'un ou plusieurs contact(s) virtuel(s), l'index tarifaire de la grille fournisseur et/ou distributeur en cours, le prix de l'électricité, le préavis de pointe mobile et/ou une ou plusieurs pointe(s) mobile(s), etc. Dans ce cas, et si le réseau local 2b comprend une source d'énergie d'origine renouvelable, les données sensiblement instantanées quantifiant le surplus ou le déficit d'origine renouvelable sont le sens de l'intensité instantanée, les variations des index EAIT (énergie injectée) et EAST (énergie soutirée sur le réseau) au niveau du compteur bidirectionnel 31 lorsque le PV est raccordé en aval du compteur 31 (cas de la figure 1b). Alternativement, les données instantanées quantifiant le surplus ou le déficit d'origine renouvelable sont les variations des index EAIT au niveau d'un compteur de production et EAST au niveau d'un compteur de consommation (cf. troisième mode de réalisation).

Dans un deuxième mode de réalisation, le boitier 32 est un équipement d'accès à internet de type « box » d'un fournisseur d'accès à Internet. Le boitier 32 est connecté à l'élément de gestion 30 par des moyens de connexion réseau tels que le Wi-Fi, une liaison Ethernet, le CPL, etc. les données peuvent être alors des données construites pour l'utilisateur du système : par exemple, il peut lui être affecté une certaine quantité d'énergie d'origine renouvelable du réseau 2 à consommer (par exemple simulant la présence de panneaux photovoltaïques), et le boitier 32 reçoit en temps réel les données de production de cette source d'énergie d'origine renouvelable. Peuvent être également reçues des données météorologiques complètes (vitesse du vent, ensoleillement, etc.), des données pré-traitées sur des serveurs d'un fournisseur d'électricité pour optimiser la charge globale, etc.

Dans un troisième mode de réalisation, le boitier 32 est un gestionnaire d'énergie connecté via une liaison filaire/radio à un ou plusieurs compteurs électriques 31 associés à des points de production d'énergie d'origine renouvelable (en particulier si l'énergie d'origine renouvelable a un ou plusieurs points de livraison locaux dédiés). La liaison peut être mono ou bidirectionnelle. L'accès à des compteurs permet un suivi en temps réel complet de la production d'énergie d'origine renouvelable et de la consommation du ou des logements, d'où la disponibilité des données sensiblement instantanées mentionnées.

La présente invention n'est ni limitée à un type particulier de données descriptives d'un état dudit réseau électrique 2, ni à une manière de fournir ces données.

*Procédé*

La présente invention concerne un procédé de modification de la consommation énergétique de l'équipement 1 du système tel que décrit précédemment. Par modification de la consommation énergétique, on entend hausse ou baisse de la puissance consommée, et typiquement variation de la quantité d'énergie stockée par l'équipement 1 (notamment en tant que chaleur dans un réservoir 10).

De façon connue, le procédé commence par une étape (a) de réception des données descriptives d'un état d'un réseau électrique 2, comprenant des données instantanées et des données prévisionnelles quantifiant un surplus ou un déficit d'énergie d'origine renouvelable au sein du réseau 2.

Dans une étape (b), l'élément de gestion 30 génère de façon dynamique une consigne de puissance en fonction desdites données instantanées. Plus précisément, une consigne $P(t)$ est calculée à tout instant (plus précisément et comme l'on verra la consigne est mise à jour c'est-à-dire recalculée à chaque réception de nouvelles données instantanées) de sorte à consommer tout ou partie du surplus actuel d'énergie d'origine renouvelable et le seuil.

Cette étape peut prendre de nombreuses formes connues de l'état de la technique, même si comme l'on verra plus loin la consigne déterminée subit après coup un traitement supplémentaire innovant.

De façon classique, il peut être prévu d'autoconsommer tout le surplus (éventuellement à un coefficient d'absorption relatif ou absolu près, voir plus loin), et la consigne de puissance est alors déterminée comme égale au surplus (à condition toutefois de ne pas dépasser la puissance maximale de l'équipement 1). Si on est en présence d'un déficit plutôt que d'un surplus (ce que l'on peut voir comme un surplus « négatif»), dans la mesure du possible on empêche le fonctionnement de l'utilisateur, i.e. la consigne de puissance est nulle (à moins bien entendu que cela ne dégrade le confort de l'utilisateur : par exemple si l'équipement 1 est un chauffe-eau et que l'utilisateur vide le réservoir 10 pour prendre une douche, alors celui-ci sera naturellement remis en chauffe au moins jusqu'à un niveau de température minimale pour pouvoir satisfaire d'autres sollicitations sur la journée).

De façon préférée et comme proposé dans la demande FR1453375, si sont reçues des données prévisionnelles et si l'équipement 1 présente une capacité énergétique potentielle estimable, une méthode alternative peut être utilisée de sorte à déterminer une consigne de puissance qui permette d'optimiser le remplissage de ladite capacité énergétique potentielle sur la journée.

Par capacité énergétique potentielle, on entend la quantité d'énergie encore consommable par l'équipement 1, c'est-à-dire l'énergie qu'il peut encore stocker avant d'être « plein », et donc plus apte à consommer de l'énergie. Dans le mode de réalisation préférée où il est un chauffe-eau, il s'agit de la quantité de chaleur encore stockable par le réservoir 10. En supposant que le volume d'eau dans le réservoir 10 est constant (l'eau chaude soutirée est remplacée par de l'eau à température ambiante), cette capacité potentielle est par exemple fonction d'un signal représentatif de la température de l'eau du réservoir 10 généré par une ou plusieurs sondes de température 20 (l'homme du métier pourra se référer aux demandes FR1554896, FR1554897 et FR1554898 qui décrivent différentes méthodes permettant de calculer la capacité thermique d'un résultat sans avoir une pluralité de sondes de température disposées à différentes hauteurs).

En particulier elle peut être donnée par la formule $E_{stockage}$ = m $*$ Cp $*$ ($T_{consigne}$ - $T_{moyenne}$), où m est la masse d'eau stockée (par exemple 200 kg), Cp la capacité thermique massique de l'eau (1,163 Wh.kg$^{-1}$K$^{-1}$), $T_{consigne}$ la température de consigne (par exemple 65°C) et $T_{moyenne}$ la température moyenne mesurée par la sonde 20 (par exemple 55°C à un moment donné). La prise de température peut être instantanée, mais il est préférable d'avoir une température moyenne sur quelques minutes par exemple pour éviter des erreurs. Il est possible de retirer à cette capacité potentielle une estimation de l'énergie qui va être soutirée sur la journée, ou tout simplement réitérer le calcul de cette capacité potentielle plusieurs fois dans la journée.

Grâce aux données prévisionnelles quantifiant le surplus ou le déficit d'énergie renouvelable et ladite capacité énergétique potentielle, l'élément de gestion 30 peut calculer un seuil de puissance injectable sur le réseau 2 pour minimiser le pic d'injection mais ce n'est pas toujours l'objectif recherché, et à partir de ce dernier et les données instantanées déterminer la consigne de puissance.

Par seuil de puissance injectable sur le réseau, on entend un niveau de surplus d'énergie d'origine renouvelable acceptable à l'échelle de l'habitation (mais excédentaire par rapport aux possibilités de stockage). En d'autres termes, là où les systèmes mentionnés précédemment proposaient de maximiser l'autoconsommation au maximum, ce mode de réalisation propose au contraire de laisser volontairement une certaine puissance être injectée sur le réseau, mais à un niveau qui sera minimum et compatible avec les contraintes des infrastructures électriques. Il est à noter que ce seuil peut tout à fait être nul (c'est-à-dire qu'on revient à l'autoconsommation maximale au fil de l'eau) si le niveau de production d'énergie d'origine renouvelable est suffisamment faible (par exemple journées d'hiver en cas d'énergie renouvelable d'origine photovoltaïque) pour qu'une consommation intégrale de cette énergie soit possible.

Ainsi, on consomme la même quantité d'énergie qu'avant, mais de façon mieux répartie le long de la journée et on évite un pic de fin d'après-midi qui pouvait survenir si la capacité énergétique maximale de l'équipement 1 était atteinte (i.e. la température de l'eau du réservoir est la température maximale).

Le seuil peut être tel que l'intégrale du surplus d'énergie au-delà du seuil doit approximer la capacité potentielle estimée (en restant inférieure). En termes plus mathématiques, si $CDE_{prev}(t)$ désigne le surplus/déficit d'énergie d'origine renouvelable prévu à instant $t$ de la journée à venir, alors

$$E_{stockage} = \int_{CDEprev(t)>seuil}(CDEprev(t) - seuil)dt.$$

En pratique, la valeur de seuil peut être obtenue par dichotomie entre 0 et la puissance crête installé. Partant par exemple d'une valeur médiane (ou du seuil déterminé pour la journée précédente), l'énergie à stocker est calculée pour cette valeur de seuil et comparée avec la capacité potentielle estimée du réservoir 10 : si la valeur calculée est supérieure à la capacité potentielle, alors le seuil doit être rehaussé, et inversement. Quelques itérations suffisent à obtenir une valeur acceptable de seuil. Il est à noter que, comme la capacité potentielle, il peut être actualisé plusieurs fois dans la journée.

Dans tous les cas, peut être pris en compte dans la détermination de la consigne de puissance un coefficient d'absorption du surplus relatif (par exemple 95%) et/ou absolu (par exemple -100W), de sorte à volontairement ne pas autoconsommer tout le surplus, ainsi qu'une hystérésis pour les charges à paliers pour éviter l'activation/désactivation d'un étage. Ces techniques induisent de légères pertes mais simplifient beaucoup le fonctionnement et réduisent déjà les risques de dommages sur l'équipement 1.

Ensuite, de façon connue, ladite consigne est alors émise dans une étape (c) à destination du module de contrôle 12 de l'équipement 1, de sorte à réguler en puissance dans une étape (d) l'équipement 1 (et plus précisément le moyen de chauffage dans le cas d'un chauffe-eau) en fonction de la consigne de puissance (en d'autres termes imposer la consigne de puissance).

Il est à noter que la consigne de puissance peut être ignorée si elle est de nature à perturber le confort de l'utilisateur.

*Limitation de la consigne*

Le présent procédé se distingue en ce que la consigne de puissance générée fait l'objet (toujours dans l'étape (b)) d'une limitation.

Cette limitation vise à ce que la consigne de puissance effective émise et appliquée présente une vitesse de variation inférieure à une vitesse seuil de référence. Plus précisément, l'objectif est que deux valeurs consécutives de consigne de puissance calculées présentent un écart trop important de sorte à empêcher des hausses brutales de puissance suivies de baisses tout aussi brutales.

Par « vitesse de variation », on entend l'écart de valeur de consigne par unité de temps, ce que l'on peut comprendre comme une dérivée même si la consigne de puissance est calculée de façon périodique mais discontinue.

En effet, les étapes (a) à (c) sont avantageusement répétées sensiblement à une fréquence prédéterminée (l'étape (d) étant mise en œuvre en permanence, chaque répétition de l'étape (c) constituant une mise à jour de la consigne appliquée par le module de contrôle 12), de sorte à générer la consigne dynamique de puissance au cours du temps, cette fréquence prédéterminée étant préférentiellement supérieure à 1 min$^{-1}$ (i.e. au moins une fois par minute, de façon encore préférée au moins une fois toutes les 10-20 secondes, et dans la suite de la présente description on prendra l'exemple avantageux d'une périodicité toutes les 15 secondes), mais on comprendra qu'elle peut être inférieure à 1 min$^{-1}$ (plus le pas de temps est large, moins l'autoconsommation est efficace, mais plus le présent procédé a d'intérêt par rapport aux procédés connus). A noter qu'alternativement ou en complément, les étapes (a) à (c) peuvent être répétées à chaque variation du surplus ou déficit d'énergie d'origine renouvelable

Dans un exemple de relance périodique toutes les 15 secondes, la vitesse de variation est ainsi calculée comme l'écart de puissance / 15 secondes (qui peut être recalculé en W.s$^{-1}$ par commodité).

En d'autres termes, dans un cas où le pas de temps est 15s, si la vitesse seuil de référence est v (en W.s-1 ), alors $C_{n+1} < C_n + 15v$.

Ainsi, de façon préférée, à chaque itération du procédé une valeur maximale de consigne de puissance est déterminée en fonction de la valeur précédente de la consigne, et de la vitesse seuil de référence ($C_{n+1\_max} = C_n + pas\_de\_temps*v$). Il s'agit de la valeur la plus haute que peut prendre la consigne de puissance sans franchir la vitesse seuil.

Et si la consigne de puissance « théorique » calculée en fonction des données reçues quantifiant de façon sensiblement instantanée le surplus ou un déficit d'énergie d'origine renouvelable au sein du réseau 2 est supérieure à cette valeur maximale, alors elle est limitée à cette dernière. En d'autres termes, $C_{n+1} = min(C_{n+1\_max}, C_{n+1\_théorique})$.

On remarque que la vitesse (et donc la consigne de puissance) est limitée par une borne supérieure, mais pas par une borne inférieure. Plus précisément, toute vitesse négative est inférieure à la vitesse de référence. Cela signifie qu'il n'y a pas de limitation à la vitesse de variation lorsqu'elle est à la baisse, ce qui autorise des arrêts rapides de l'autoconsommation pour ne pas causer davantage de soutirage réseau indésirable si la production d'énergie renouvelable chutait brutalement.

Toutefois, après une telle chute, si la production d'énergie renouvelable remonte brutalement, la valeur de la consigne et donc la consommation de l'équipement 1 suivra la vitesse seuil de référence. De façon surprenante et comme cela a été confirmé par des tests, cela ne diminue que marginalement l'autoconsommation d'énergie renouvelable tout en diminuant très fortement les commutations (c'est-à-dire les mises en marche/arrêt du moyen de chauffe) et le soutirage réseau indésirable.

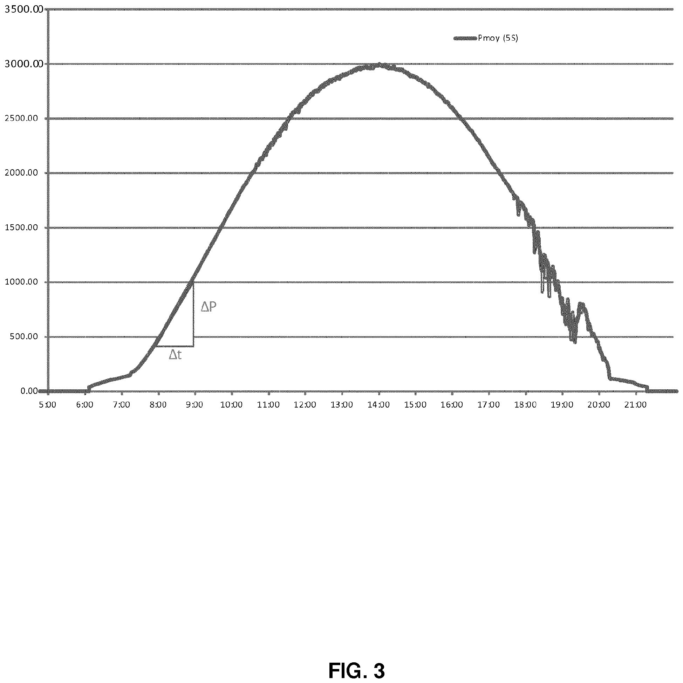

En effet, l'idée est que la ou les vitesses seuil de référence (on verra qu'il peut y en avoir plusieurs, en particulier deux) soit choisie proportionnelle à une vitesse maximale d'augmentation dite « normale » de production d'énergie d'origine renouvelable au sein du réseau 2. Plus précisément, il est normal que la production d'énergie d'origine renouvelable varie au cours du temps, comme le montre la **figure 3** qui représente la production électrique d'une installation photovoltaïque de référence, qui peut correspondre à la source personnelle d'énergie renouvelable s'il y en a une, mais l'augmentation normale est assez lente, typiquement au maximum environ 2.5 W/15 secondes pour une installation photovoltaïque de 3 kWc orientée plein Sud et inclinée de 30°, observée en 8h et 10h30. On comprend ainsi que la ou les vitesses seuil de référence dépendent de la puissance installée de ladite installation de référence. Un schéma similaire est observable pour d'autres énergies renouvelables telles que l'éolien.

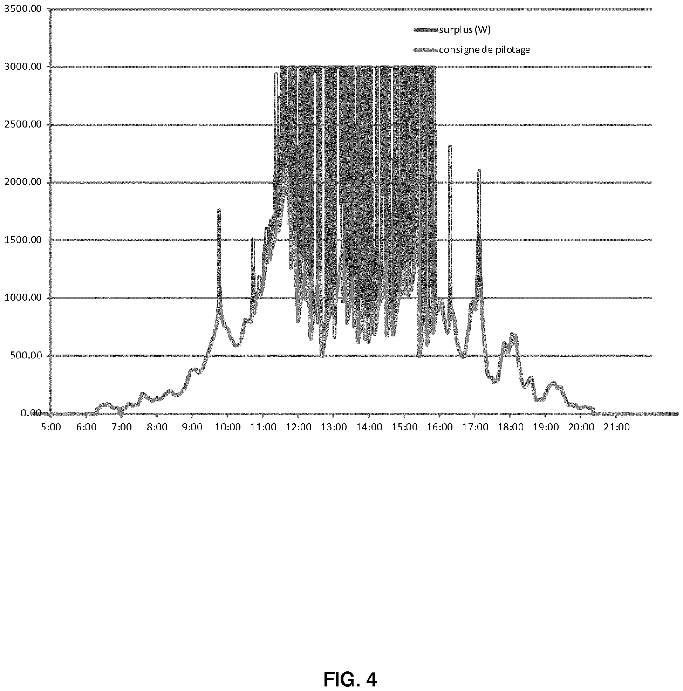

Des variations sensiblement plus rapides que cette vitesse maximale d'augmentation sont alors des phénomènes anormaux (généralement d'origine climatique) qui prennent la forme de pics de forte amplitude et de faible durée. En d'autres termes, si la production d'énergie d'origine renouvelable augmente nettement plus vite que la vitesse maximale d'augmentation dite « normale », alors on sait avec une quasi-certitude que l'on est en présence d'un pic et que la production va retomber aussitôt. Il est ainsi inutile de suivre la hausse du surplus surtout si le décalage entre les données réelles instantanées et transmises est élevé, d'où l'intérêt de la limitation. Ainsi, le fait de limiter la hausse de consommation de l'équipement 1 ne diminue pas l'efficacité de l'autoconsommation, mais limite grandement le nombre de commutations et le soutirage indésirable d'électricité sur le réseau lié à la fréquence de rafraichissement des données. On voit en effet sur la **figure 4,** à comparer à la figure 1b, que les pics sont efficacement « écrêtés ».

A ce titre, de façon avantageuse, si les données descriptives d'un état du réseau électrique 2 comprennent des données quantifiant de façon prévisionnelle un niveau d'instabilité du surplus ou du déficit d'énergie d'origine renouvelable au sein de réseau 2 (typiquement des données météorologiques), alors ladite limitation de ladite consigne dynamique de puissance générée est mise en œuvre à l'étape (b) seulement si lesdites données quantifiant de façon prévisionnelle un niveau d'instabilité du surplus ou du déficit d'énergie d'origine renouvelable au sein de réseau 2 sont représentatives d'une instabilité significative (en d'autres termes s'il est possible de prévoir que la journée va présenter une production d'énergie renouvelable très irrégulière i.e. avec des variations de surplus largement supérieures à la vitesse seuil de référence).

A noter que l'état peut changer dans la journée si les pics se révèlent longs et/ou que l'analyse des prédictions pour la journée ne fait pas apparaître de fortes intermittences

Par instabilité « significative », on entend telle que les pics présentent une durée de l'ordre de la fréquence de rafraîchissement des données, i.e. moins d'une minute.

Ainsi, une instabilité légère, par exemple avec des passages de nuages lents qui induisent quelques creux de production espacés de plusieurs dizaines de minutes par jour, est traitée de façon classique, sans limitation de la vitesse d'augmentation de la consommation de l'équipement 1. En effet, les pics ne causent que très peu de dommages dans une telle situation.

A noter qu'alternativement, il peut être prévu que si lesdites données quantifiant de façon prévisionnelle un niveau d'instabilité du surplus ou du déficit d'énergie d'origine renouvelable au sein de réseau 2 sont représentatives d'une instabilité significative, la limitation soit quand même appliquée mais avec une valeur de vitesse seuil de référence modifiée à la hausse (typiquement en remplaçant la première valeur seuil de référence par la deuxième valeur seuil de référence, ce qui revient à traiter les variations lentes de production comme des variations de baisse de consommation, voir après) pour améliorer l'autoconsommation. Un tel mode de réalisation peut, en l'absence de données météorologiques être appliqué à la volée dans la journée si les pics se révèlent durables et/ou que l'analyse de l'historique de la journée ne fait pas apparaître de fortes intermittences.

On remarque en outre que la présente invention est très efficace en combinaison avec le calcul d'un seuil de puissance injectable sur le réseau (au lieu d'une autoconsommation totale), dans la mesure où la limitation de la vitesse de variation de la consigne de puissance est d'autant plus facile si celle-ci est bornée.

*Vitesses seuil de référence*

Comme expliqué, il y a avantageusement deux vitesses seuil de référence.

La première vitesse seuil de référence est celle discutée précédemment, elle vaut préférentiellement environ trois à cinq fois (ce coefficient dépendant de la puissance nominale de l'équipement 10, les valeurs trois à cinq étant typique pour des équipements tels qu'un chauffe-eau domestique de 2000-3000W, mais pouvant être naturellement bien supérieures si l'équipement 10 présente une très forte puissance maximale) la vitesse maximale d'augmentation de production d'énergie d'origine renouvelable au sein du réseau 2, ce qui correspond (pour l'exemple d'installation de référence décrit ci-avant) à ladite première vitesse seuil de référence comprise entre 5 et 50 Watts par 15 secondes (avantageusement environ 10 W / 15 secondes) pour un équipement 10 domestique.

Si cette valeur donne de façon générale d'excellents résultats, dans certains cas particuliers elle peut s'avérer insuffisante. En effet, si l'instabilité du surplus résulte essentiellement de celle de la production d'énergie renouvelable, quelques écarts brutaux peuvent au contraire être dus à une forte variation inverse de la consommation (puisque *surplus = consommation - production).* Et de tels écarts dus à la production peuvent créer quelques creux d'une certaine durée, mais en rien des pics dommageables pour l'équipement 1.

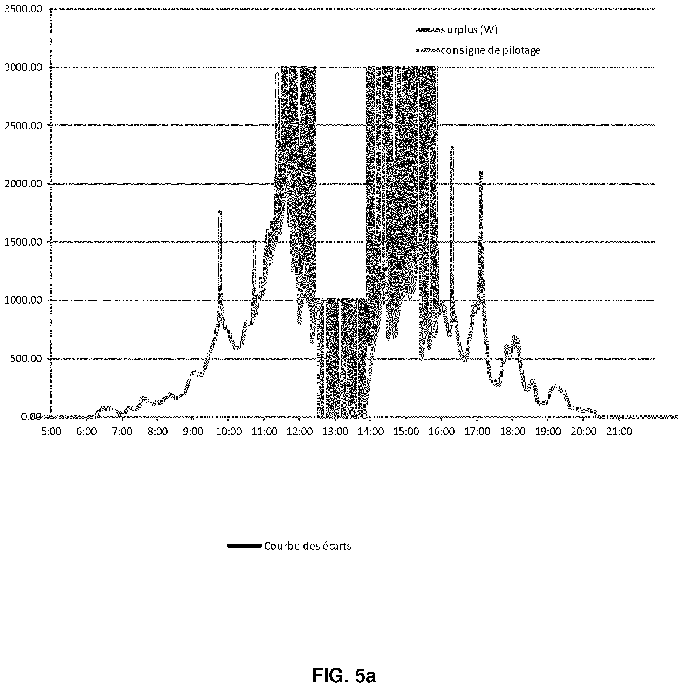

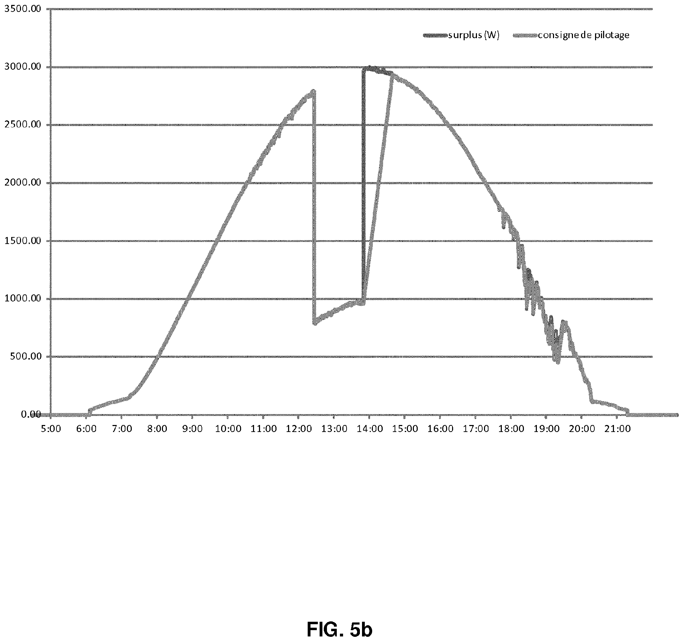

La limitation simple de ladite consigne dynamique de puissance générée de sorte à ce qu'elle présente une vitesse de variation inférieure à la première vitesse seuil de référence peut donc localement entraîner une perte d'autoconsommation, comme on le voit sur les **figures 5a et 5b,** qui représentent la mise du procédé avec une seule vitesse seuil de référence sur une journée calme et une journée mouvementée ayant chacune connue la même période temporaire de forte consommation au sein du réseau 2. A la fin de cette période, la baisse de la consommation se traduit par une hausse du surplus qu'il serait souhaitable de rattraper rapidement.

Ainsi, est avantageusement introduite une deuxième vitesse seuil de référence supérieure à la première vitesse seuil de référence, avantageusement 10 à 20 fois supérieure à ladite première vitesse de seuil, c'est-à-dire typiquement entre 50 et 200 Watts par 15 secondes (avantageusement moins de 100W / 15 secondes, et notamment 75 W / 15 secondes). On note que la deuxième vitesse seuil de référence est également proportionnelle à la vitesse d'augmentation maximale, typiquement entre 15 et 100 fois sa valeur (ce coefficient dépendant toujours de la puissance installée, l'intervalle 15-100 étant typique d'un usage domestique).

La limitation de la vitesse est toujours mise en œuvre, à la première ou la seconde vitesse seuil de référence selon si la hausse du surplus est due à une hausse de la production ou une baisse de la consommation au sein du réseau électrique 2. Ainsi, si la hausse du surplus est due à une baisse de la consommation, l'autoconsommation est rapidement maximisée.

Pour cela, il suffit que les données descriptives d'un état du réseau électrique 2 comprennent des données quantifiant de façon sensiblement instantanée la variation de consommation électrique (ou de production d'énergie d'origine renouvelable) au sein de réseau 2.

L'étape (b) comprend ainsi avantageusement :

- si lesdites données quantifiant de façon sensiblement instantanée la variation de consommation électrique au sein de réseau 2 ne sont pas représentatives d'une baisse significative de la consommation (et/ou si les données quantifiant de façon sensiblement instantanée la variation de production d'énergie d'origine renouvelable au sein de réseau 2 sont représentatives d'une hausse significative de la production) : la limitation de ladite consigne dynamique de puissance générée de sorte à ce qu'elle présente une vitesse de variation inférieure à une première vitesse seuil de référence ;

- si lesdites données quantifiant de façon sensiblement instantanée la variation de production d'énergie d'origine renouvelable au sein de réseau 2 ne sont pas représentatives d'une hausse significative de la production (et/ou si les données quantifiant de façon sensiblement instantanée la variation de consommation électrique au sein de réseau 2 sont représentatives d'une baisse significative de la consommation) : la limitation de ladite consigne dynamique de puissance générée de sorte à ce qu'elle présente une vitesse de variation inférieure à une deuxième vitesse seuil de référence supérieure à la première vitesse de référence.

A noter que la notion de hausse ou baisse « significative » peut être définie vis-à-vis d'un seuil d'enclenchement (par exemple 100W / 15s), en-dessous duquel la limitation n'a que très peu d'impact.

En d'autres termes, de façon particulièrement préférée, on distingue trois cas : tant que la variation (l'augmentation du surplus sur un pas de temps) est inférieure au seuil d'enclenchement, peu importe (on peut appliquer par défaut une limitation à la première vitesse seuil de référence), et si la variation est supérieure à ce seuil, on discrimine l'origine de l'augmentation (hausse de production ou baisse de consommation) et en fonction on limite la consigne conformément à la première ou à la deuxième vitesse seuil de référence.

Par ailleurs, comme expliqué avant, il peut être prévu que des variations lentes de productions (c'est-à-dire si les données quantifiant de façon prévisionnelle un niveau d'instabilité du surplus ou du déficit d'énergie d'origine renouvelable au sein de réseau 2 ne sont pas représentatives d'une instabilité significative) soient traitées comme des variations de consommation, i.e. en appliquant la deuxième vitesse seuil de référence.

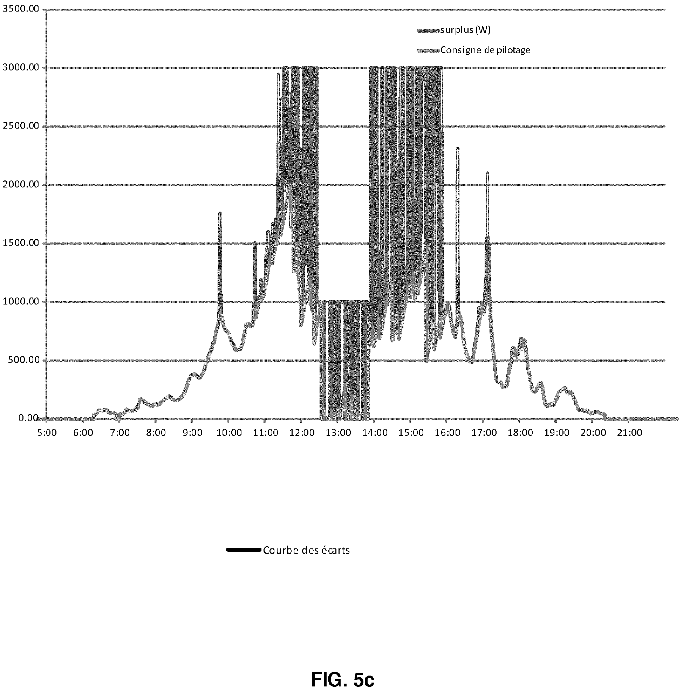

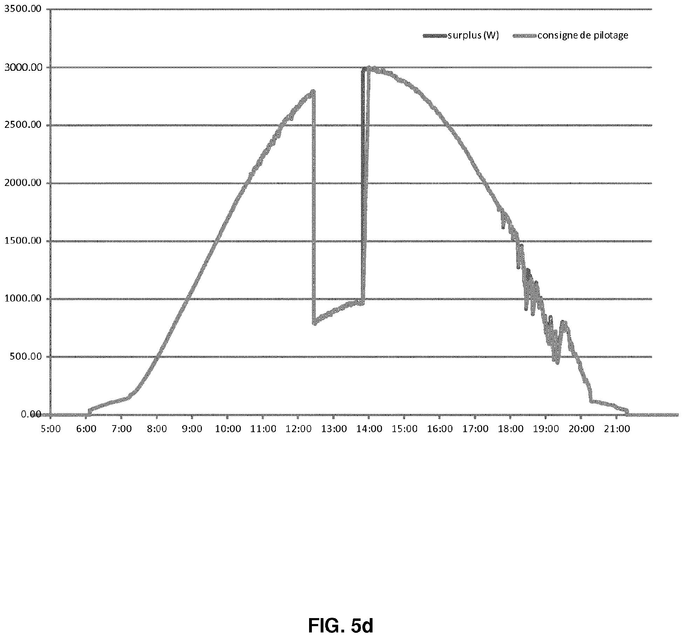

Les **figures 5c et 5d** correspondent respectivement aux figures 5a et 5c pour lesquelles a été appliquée la deuxième vitesse seuil de référence si la hausse est due à une baisse de la consommation. On remarque le gain d'autoconsommation à la fin de la période de forte consommation.

Le procédé comprend avantageusement une étape préalable (par exemple tous les matins) de calcul de ladite (ou lesdites) vitesse seuil de référence pour une installation de production d'énergie renouvelable de référence. Alternativement, les vitesses seuil de référence peuvent lui être transmises avec les données descriptives de l'état du réseau électrique 2.

*Résultats*

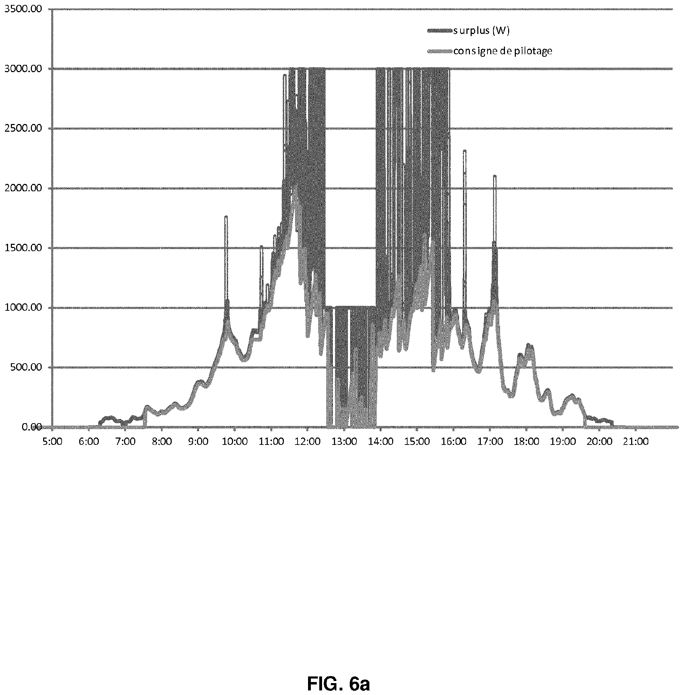

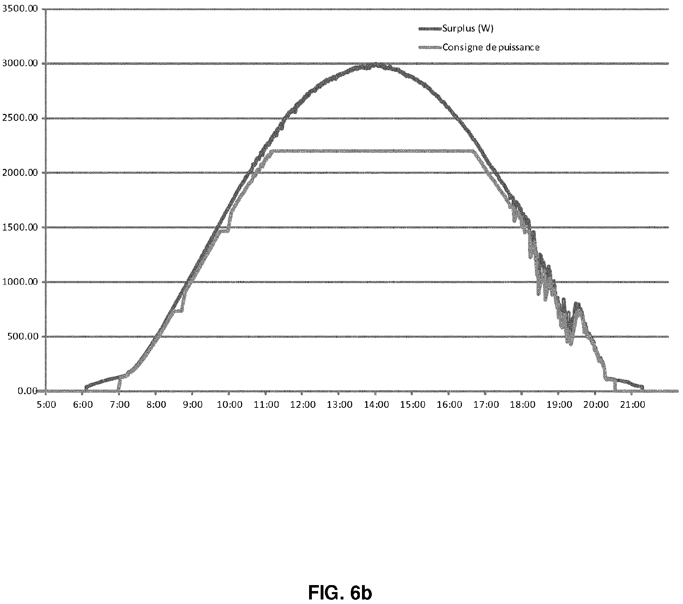

Les **figures 6a et 6b** représentent le résultat de tests mis en œuvre avec un chauffe-eau de 2200 Watts équipé de trois résistances (les moyens de chauffage alimentés par le réseau 2) dont une avec gradateur de sorte à réguler en puissance conformément au principe décrit dans la demande FR1452015 (coefficient de 95% et hystérésis d'enclenchement de 120 Watts), sur deux journées types (une très instable avec en plus une augmentation temporaire de la puissance consommée, et une optimale). Le pas de temps d'actualisation des données est 15s. Le fonctionnement est en autoconsommation totale (tant que l'on n'atteint pas la puissance maximale de 2200W du chauffe-eau). On notera d'ailleurs que cette puissance maximale limitée ne permet pas d'autoconsommer tout le surplus, d'où le plateau sur la figure 6b.

La mise en œuvre du présent procédé (avec deux vitesses seuil de référence) réduit considérablement le nombre de commutations des résistances sur cette journée type (de 138 à 24), ce qui devient compatible avec la durée de vie des relais. De plus, on divise par un facteur 8 le soutirage réseau par rapport à un pilotage équivalent sans limitation de la vitesse de variation de la consigne de puissance.

Les « encoches » visibles notamment sur la partie gauche de la courbe de consigne de la figure 6b correspond à l'enclenchement successif des résistances sans gradateur (en tout-ou-rien), qui coïncident avec une extinction de la résistance à gradateur (qui ne redémarre pas instantanément du fait de l'hystérésis).

*Mécanisme de leurre*

Dans un mode de réalisation particulièrement préféré (représenté par la figure 1b) où l'équipement 1 est un chauffe-eau, le système comprend en outre un élément de leurre 21 (qui est typiquement confondu avec l'élément de contrôle 30) disposé entre la sonde 20 et le module de contrôle 12. L'élément de leurre 21 et l'élément de gestion 30 peuvent être distincts et reliés à un gestionnaire d'énergie commun 31 (comme dans le cas de la figure 1b).

Dans tous les cas, cet élément de leurre 21 est configuré pour intercepter et modifier le signal émis par la sonde 20 de sorte à modifier (en particulier augmenter) la capacité énergétique potentielle du réservoir d'eau 10, en fonction des données descriptives d'un état dudit réseau électrique 2.

En d'autres termes, l'élément de leurre 21 fausse volontairement les mesures de température de la sonde 20, de sorte à duper le module de contrôle 12 et altérer la régulation de la température du réservoir 10. Le signal est en fait intercepté par l'élément de leurre 21, modifié et renvoyé au module de contrôle 12. Ce dernier le traite comme étant un signal authentique issu de la sonde 20.

Par exemple, pendant une phase de chauffe de l'eau (et donc de remontée en température du réservoir 10), l'élément de leurre 21 peut modifier le signal envoyé par la sonde 20 de sorte à faire croire au module de contrôle 12 que l'eau est moins chaude qu'elle ne l'est réellement. Cela permet ainsi de dépasser le deuxième seuil de température, et d'influer sur le calcul de la capacité énergétique potentielle (qui dépend de la mesure de température de la sonde 20).

Un tel mode « surchauffe » peut être utilisé pour augmenter la consommation du CEJ et donc la quantité d'énergie stockée. Dans ce mode, l'élément de leurre 21 est configuré pour que le signal reçu par le module de contrôle 12 soit représentatif d'une température plus basse que la température réelle de l'eau du réservoir 10, lorsque les données descriptives d'un état dudit réseau électrique 2 sont caractéristiques d'une surabondance actuelle et/ou d'un déficit futur d'énergie d'origine renouvelable au sein dudit réseau électrique (en d'autres termes si la production d'origine renouvelable est à la baisse à court terme), de sorte à augmenter la capacité énergétique du réservoir d'eau 10.

Grâce à la surchauffe, le deuxième seuil de température est franchi et de l'eau à 5, voire 15°C au-delà de la température de confort est stockée. Cela permet de gérer des journées de très forte production, du type de celle représentée sur la figure 6b.

On connait de nombreuses façons de mettre en œuvre cet élément de leurre et on se rapportera par exemple à la demande FR1363229 susmentionnée. Si le module de contrôle 12 est une carte électronique évoluée permettant soit d'adapter la température de consigne en fonction des contraintes du système électrique ou de la recevoir sous forme de valeur ou d'allure (typiquement d'un gestionnaire d'énergie), l'élément de leurre 21 peut être directement inclus dans le module de contrôle 12 (en tant qu'élément logiciel).

*Système*

Selon un deuxième aspect, l'invention concerne un système pour la mise en œuvre du procédé selon l'une des revendications précédentes.

Il comprend l'équipement 1 alimenté par le réseau 2 et un élément de gestion 30 configuré pour la mise en œuvre du procédé selon le premier aspect.

De façon préférée, l'équipement 1 est un chauffe-eau et donc le système comprend comme expliqué précédemment :

- un réservoir d'eau 10 ;
- un dispositif de chauffage 11 de l'eau du réservoir 10, le dispositif 11 comprenant un moyen de chauffage alimenté par un réseau électrique 2 ;
- une sonde de température 20 configurée pour émettre un signal représentatif de la température de l'eau du réservoir 10 ;
- un module de contrôle 12 régulant en puissance le moyen de chauffage dudit dispositif de chauffage 11.

**Revendications**

1. Procédé de modification de la consommation énergétique d'un équipement (1) alimenté par un réseau électrique (2), le procédé comprenant des étapes de :

   (a) réception de données descriptives d'un état du réseau électrique (2), comprenant des données quantifiant de façon sensiblement instantanée un surplus ou un déficit d'énergie d'origine renouvelable au sein du réseau (2) ;
   (b) génération par un élément de gestion (30) d'une consigne dynamique de puissance en fonction desdites données ;
   (c) émission de ladite consigne à destination d'un module de contrôle (12) de l'équipement (1) ;
   (d) régulation en puissance dudit équipement (1) en fonction de la consigne de puissance ;

   **caractérisée en ce que** l'étape (b) comprend la limitation de ladite consigne dynamique de puissance générée de sorte à ce qu'elle présente une vitesse de variation inférieure à une vitesse seuil de référence.

2. Procédé selon la revendication 1, dans lequel les étapes (a) à (c) sont répétées sensiblement à une fréquence prédéterminée, de sorte à générer une consigne dynamique de puissance au cours du temps.

**3.** Procédé selon la revendication 2, dans lequel ladite fréquence prédéterminée est supérieure à 1 min⁻¹.

**4.** Procédé selon l'une des revendications précédentes, dans lequel les données descriptives d'un état du réseau électrique (2) comprennent des données quantifiant de façon prévisionnelle un niveau d'instabilité du surplus ou du déficit d'énergie d'origine renouvelable au sein du réseau (2), ladite limitation de ladite consigne dynamique de puissance générée étant mise en œuvre à l'étape (b) seulement si lesdites données quantifiant de façon prévisionnelle un niveau d'instabilité du surplus ou du déficit d'énergie d'origine renouvelable au sein de réseau (2) sont représentatives d'une instabilité significative.

**5.** Procédé selon l'une des revendications précédentes, dans lequel les données descriptives d'un état du réseau électrique (2) comprennent des données quantifiant de façon sensiblement instantanée la variation de consommation électrique au sein de réseau (2), l'étape (b) comprenant :

- la limitation de ladite consigne dynamique de puissance générée de sorte à ce qu'elle présente une vitesse de variation inférieure à une première vitesse seuil de référence, si lesdites données quantifiant de façon sensiblement instantanée la variation de consommation électrique au sein de réseau (2) ne sont pas représentatives d'une baisse significative de la consommation ; et sinon
- la limitation de ladite consigne dynamique de puissance générée de sorte à ce qu'elle présente une vitesse de variation inférieure à une deuxième vitesse seuil de référence supérieure à la première vitesse de référence.

**6.** Procédé selon l'une des revendications précédente, dans lequel la vitesse seuil de référence est proportionnelle à une vitesse maximale d'augmentation de production d'énergie d'origine renouvelable au sein du réseau (2).

**7.** Procédé selon la revendication 6, comprenant une étape préalable de calcul de ladite vitesse seuil de référence pour une installation de production d'énergie renouvelable de référence.

**8.** Procédé selon l'une des revendications 6 et 7 et en combinaison avec la revendication 5, dans laquelle ladite première vitesse seuil de référence est comprise entre 5 et 50 Watts par 15 secondes, et ladite deuxième vitesse seuil de référence est comprise entre 50 et 200 Watts par 15 secondes.

**9.** Procédé selon l'une des revendications précédente, dans lequel ledit équipement (1) est un chauffe-eau comprenant un réservoir (10), un dispositif de chauffage (11) de l'eau du réservoir (10) et le module de contrôle (12), le dispositif de chauffage (11) comprenant un moyen de chauffage alimenté par le réseau électrique (2)

**10.** Procédé selon la revendication 9, dans lequel l'étape (d) consiste en la régulation en puissance dudit moyen de chauffage par le module de contrôle (12) en fonction de la consigne de puissance.

**11.** Procédé selon l'une des revendications 9 et 10, dans lequel le module de contrôle (12) est configuré pour ignorer la consigne de puissance lorsqu'une température de l'eau du réservoir (10) est supérieure à un seuil prédéfini, un signal représentatif de la température de l'eau du réservoir (10) étant généré par une sonde de température (20) et émis à destination du module de contrôle (12).

**12.** Procédé selon la revendication 11, dans lequel l'étape (b) comprend l'interception et la modification par un élément de leurre (21) disposé entre la sonde (20) et le module de contrôle (12) dudit signal représentatif de la température de l'eau du réservoir (10) en fonction desdites données descriptives d'un état du réseau électrique (2).

**13.** Procédé selon l'une des revendications précédentes, dans lequel l'étape (a) comprenant la réception desdites données descriptives d'un état du réseau électrique (2) par un boitier (31) depuis un réseau de communication (3), le boitier (31) étant connecté audit élément de gestion (30) ou au module de contrôle (12).

**14.** Procédé selon l'une des revendications précédentes, dans lequel le réseau (2) comprend un réseau local (2b) comprenant des moyens locaux de production d'énergie renouvelable connectés en aval d'un compteur (31), lesdites données quantifiant de façon sensiblement instantanée un surplus ou un déficit d'énergie d'origine renouvelable au sein du réseau (2) étant des données de consommation fournies par le compteur (31).

**15.** Système comprenant un équipement (1) alimenté par un réseau électrique (2) et un élément de gestion (30) configuré pour la mise en œuvre du procédé selon l'une des revendications précédentes de modification de la consommation énergétique de l'équipement (1).

**Patentansprüche**

1. Verfahren zur Änderung des Energieverbrauchs eines Geräts (1), das von einem Stromnetz (2) versorgt wird, wobei das Verfahren die folgenden Schritte umfasst:

   (a) Empfang von Daten, die einen Zustand des Stromnetzes (2) beschreiben und Daten umfassen, die einen Überschuss oder einen Mangel an Energie aus erneuerbaren Quellen in dem Netz (2) im Wesentlichen augenblicklich quantifizieren;
   (b) Erzeugung eines dynamischen Leistungseinstellwerts in Abhängigkeit von den Daten durch ein Verwaltungselement (30);
   (c) Ausgabe des Einstellwerts an ein Steuerungsmodul (12) des Geräts (1);
   (d) Leistungsregelung des Geräts (1) in Abhängigkeit von dem Leistungseinstellwert;

   **dadurch gekennzeichnet, dass** der Schritt (b) die Begrenzung des dynamischen Leistungseinstellwerts umfasst, der derart erzeugt wird, dass er eine Veränderungsgeschwindigkeit aufweist, die niedriger als eine Bezugsschwellengeschwindigkeit ist.

2. Verfahren nach Anspruch 1, wobei die Schritte (a) bis (c) im Wesentlichen mit einer vorbestimmten Häufigkeit wiederholt werden, derart, dass im Laufe der Zeit ein dynamischer Leistungseinstellwert erzeugt wird.

3. Verfahren nach Anspruch 2, wobei die vorbestimmte Häufigkeit größer als 1 min$^{-1}$ ist.

4. Verfahren nach einem der vorhergehenden Ansprüche, wobei die Daten, die einen Zustand des Stromnetzes (2) beschreiben, Daten umfassen, die prognostisch ein Instabilitätsniveau des Überschusses oder des Mangels an Energie aus erneuerbaren Quellen in dem Netz (2) quantifizieren, wobei die Begrenzung des erzeugten dynamischen Leistungseinstellwerts im Schritt (b) nur durchgeführt wird, wenn die Daten, die ein Instabilitätsniveau des Überschusses oder des Mangels an Energie aus erneuerbaren Quellen in dem Netz (2) prognostisch quantifizieren, eine erhebliche Instabilität darstellen.

5. Verfahren nach einem der vorhergehenden Ansprüche, wobei die Daten, die einen Zustand des Stromnetzes (2) beschreiben, Daten umfassen, die die Schwankung des Stromverbrauchs in dem Netz (2) im Wesentlichen augenblicklich quantifizieren, wobei der Schritt (b) umfasst:

   - die Begrenzung des erzeugten dynamischen Leistungseinstellwerts, derart, dass er eine Schwankungsgeschwindigkeit darstellt, die niedriger als eine erste Bezugsschwellengeschwindigkeit ist, wenn die Daten, die die Schwankung des Stromverbrauchs in dem Netz (2) im Wesentlichen augenblicklich quantifizieren, keine erhebliche Senkung des Verbrauchs darstellen; und anderenfalls
   - die Begrenzung des erzeugten dynamischen Leistungseinstellwerts, derart, dass er eine Schwankungsgeschwindigkeit aufweist, die niedriger als eine zweite Bezugsschwellengeschwindigkeit ist, die höher als die erste Bezugsgeschwindigkeit ist.

6. Verfahren nach einem der vorhergehenden Ansprüche, wobei die Bezugsschwellengeschwindigkeit proportional zu einer Höchstgeschwindigkeit der Erhöhung der Erzeugung von Energie aus erneuerbaren Quellen in dem Netz (2) ist.

7. Verfahren nach Anspruch 6, das einen vorhergehenden Schritt zur Berechnung der Bezugsschwellengeschwindigkeit für eine Bezugsanlage zur Erzeugung erneuerbarer Energie umfasst.

8. Verfahren nach einem der Ansprüche 6 und 7 und in Kombination mit Anspruch 5, wobei die erste Bezugsschwellengeschwindigkeit zwischen 5 und 50 Watt pro 15 Sekunden beträgt, und die zweite Bezugsschwellengeschwindigkeit zwischen 50 und 200 Watt pro 15 Sekunden beträgt.

9. Verfahren nach einem der vorhergehenden Ansprüche, wobei das Gerät (1) ein Warmwasserbereiter ist, der einen Behälter (10), eine Vorrichtung (11) zum Erhitzen des Wassers des Behälters (10) und das Steuerungsmodul (12) umfasst, wobei die Heizvorrichtung (11) ein Heizmittel umfasst, das von dem Stromnetz (2) versorgt wird.

10. Verfahren nach Anspruch 9, wobei der Schritt (d) aus der Leistungsregelung des Heizmittels durch das Steuerungsmodul (12) in Abhängigkeit von dem Leistungseinstellwert besteht.

**11.** Verfahren nach einem der Ansprüche 9 und 10, wobei das Steuerungsmodul (12) dazu ausgestaltet ist, den Leistungseinstellwert zu ignorieren, wenn eine Temperatur des Wassers des Behälters (10) höher als ein vordefinierter Schwellenwert ist, wobei ein Signal, das die Temperatur des Wassers des Behälters (10) darstellt, durch eine Temperatursonde (20) erzeugt wird, und an das Steuerungsmodul (12) gesendet wird.

**12.** Verfahren nach Anspruch 11, wobei der Schritt (b) das Erfassen und die Änderung des Signals, das die Temperatur des Wassers des Behälters (10) darstellt, in Abhängigkeit von den Daten, die einen Zustand des Stromnetzes (2) beschreiben, durch ein Täuschungselement (21) umfasst, das zwischen der Sonde (20) und dem Steuerungsmodul (12) angeordnet ist.

**13.** Verfahren nach einem der vorhergehenden Ansprüche, wobei der Schritt (a) den Empfang der Daten, die einen Zustand des Stromnetzes (2) beschreiben, durch ein Steuergerät (31) von einem Kommunikationsnetz (3) umfasst, wobei das Steuergerät (31) mit dem Verwaltungselement (30) oder mit dem Steuerungsmodul (12) verbunden ist.

**14.** Verfahren nach einem der vorhergehenden Ansprüche, wobei das Netz (2) ein lokales Netz (2b) umfasst, das lokale Mittel zur Erzeugung erneuerbarer Energie umfasst, die einem Zähler (31) nachgelagert verbunden sind, wobei die Daten, die einen Überschuss oder einen Mangel an Energie aus erneuerbaren Quellen in dem Netz (2) auf im Wesentlichen augenblickliche Weise quantifizieren, Verbrauchsdaten sind, die von dem Zähler (31) geliefert werden.

**15.** System, das ein Gerät (1), das durch ein Stromnetz (2) versorgt wird, und ein Verwaltungselement (30) umfasst, das für die Durchführung des Verfahrens nach einem der vorhergehenden Ansprüche zur Änderung des Energieverbrauchs des Geräts (1) ausgestaltet ist.

**Claims**

**1.** A method for modifying the energy consumption of equipment (1) supplied by an electrical network (2), the method comprising steps of:

(a) receiving descriptive data of a state of the electrical network (2), comprising data quantifying in a substantially instantaneous manner a surplus or a deficit of energy from renewable sources within the network (2);
(b) generating, by a management element (30), a dynamic power setpoint based on said data;
(c) emitting said setpoint to a module (12) for controlling the equipment (1);
(d) power-regulating said equipment (1) based on the power setpoint;

**characterized in that** step (b) comprises the limitation of said dynamic power setpoint generated so that it has a variation speed lower than a threshold reference speed.

**2.** The method according to claim 1, wherein steps (a) to (c) are repeated substantially at a predetermined frequency, so as to generate a dynamic power setpoint over time.

**3.** The method according to claim 2, wherein said predetermined frequency is greater than 1 min$^{-1}$.

**4.** The method according to any of the preceding claims, wherein the descriptive data of a state of the electrical network (2) comprise data quantifying in a predictive manner a level of instability of the surplus or the deficit of energy from renewable sources within the network (2), said limitation of said generated dynamic power setpoint being implemented in step (b) only if said data quantifying in a predictive manner a level of instability of the surplus or the deficit of energy from renewable sources within the network (2) are representative of significant instability.

**5.** The method according to any of the preceding claims, wherein the data descriptive of a state of the electrical network (2) comprise data quantifying in a substantially instantaneous manner the variation in electrical consumption within the network (2), step (b) comprising:

- limiting said generated dynamic power setpoint so that it has a variation speed lower than a first threshold reference speed, if said data quantifying in a substantially instantaneous manner the variation in electrical consumption within the network (2) are not representative of a significant drop in consumption; and otherwise
- limiting said generated dynamic power setpoint so that it has a variation speed lower than a second threshold reference speed greater than the first reference speed.

6. The method according to any of the preceding claims, wherein the threshold reference speed is proportional to a maximum speed of increase in the production of energy from renewable sources within the network (2).

7. The method according to claim 6, comprising a preliminary step of calculating said threshold reference speed for a reference renewable energy production facility.

8. The method according to any of claims 6 and 7 and in combination with claim 5, wherein said first threshold reference speed is comprised between 5 and 50 Watts per 15 seconds, and said second threshold reference speed is comprised between 50 and 200 Watts per 15 seconds.

9. The method according to any of the preceding claims, wherein said equipment (1) is a water heater comprising a tank (10), a device (11) for heating the water in the tank (10) and the control module (12), the heating device (11) comprising a heating means supplied by the electrical network (2).

10. The method according to claim 9, wherein step (d) consists in power-regulating said heating means by the control module (12) based on the power setpoint.

11. The method according to any of claims 9 and 10, wherein the control module (12) is configured to ignore the power setpoint when a temperature of the water in the tank (10) is greater than a predefined threshold, a signal representative of the temperature of the water in the tank (10) being generated by a temperature probe (20) and emitted to the control module (12).

12. The method according to claim 11, wherein step (b) comprises the interception and the modification by a decoy element (21) disposed between the probe (20) and the control module (12) of said signal representative of the temperature of the water in the tank (10) based on said data descriptive of a state of the electrical network (2).

13. The method according to any of the preceding claims, wherein step (a) comprising the receipt of said data descriptive of a state of the electrical network (2) by a casing (31) from a communication network (3), the casing (31) being connected to said management element (30) or to the control module (12).

14. The method according to any of the preceding claims, wherein the network (2) comprises a local network (2b) comprising local renewable energy production means connected downstream of a meter (31), said data quantifying in a substantially instantaneous manner a surplus or a deficit of energy from renewable sources within the network (2) being consumption data provided by the meter (31).

15. A system comprising equipment (1) supplied by an electrical network (2) and a management element (30) configured for the implementation of the method according to any of the preceding claims for modifying the energy consumption of the equipment (1).

FIG. 1

**FIG. 2a**

FIG. 2b

**FIG. 3**

FIG. 4

FIG. 5a

**FIG. 5b**

FIG. 5c

**FIG. 5d**

**FIG. 6a**

**FIG. 6b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1363229
- FR 1452015
- FR 1452022
- FR 3019882
- FR 1453375
- FR 1554896
- FR 1554897
- FR 1554898